# EUROPEAN PATENT APPLICATION

(11) **EP 4 075 319 A1**
(43) Date of publication of application: **19.10.2022**
(21) Application number: 21185699.2
(22) Date of filing: 15.07.2021
(51) Int. Cl.: G06F 30/23, G06F 113/24, G06F 119/08

(54) **SELECTION OF GLASS SHEETS UNDER THERMAL STRESS CONDITIONS**

(30) Priority: 14.04.2021 IT 202100009419
(71) Applicant: Glassadvisor S.r.l., 39100 Bolzano BZ (IT)
(72) Inventor: FAVOINO, Fabio, 10138 Torino (TO) (IT); BARACAINI, Manuela, 13897 Occhieppo Inferiore (BI) (IT); GIOVANNINI, Luigi, 10032 Brandizzo (TO) (IT); PAPAIZ, Luca, 39100 Bolzano BZ (IT)
(74) Representative: Perani & Partners S.p.A.

(57) **Abstract**

A design method for glass sheets as a function of thermal stress is based on a database, containing meteorological data on a time distribution with intraday data and data distributed throughout the year, and divided by geographic locations. The method includes selecting and processing meteorological data related to the geographic location of the building in which the glass sheet is to be placed. With the processing, occurrences of critical thermal stress conditions for glass sheets are identified, within said time distribution. The thermal stress conditions are preferably calculated also considering installation conditions such as exposure and shadows. The type of glass sheet, with different degrees of resistance to thermal stress, is selected based on the frequency of occurrence of critical conditions in the time distribution.

## Description

### Technical field

The present invention is developed in the field of design and selection of glass sheets for buildings, which can be used for example as windows or as façades, as a function of thermal shock risk.

### Background art

The glass sheets of a building reach different temperatures according to the environmental conditions to which they are subjected, mainly with reference to temperature and radiation. Even within the same sheet, the temperature of the glass may vary as a function of the position, for example being greater in the centre of the sheet than on the edges.

In the event of a high thermal gradient within a single sheet, mechanical stress states are created in the sheet which can lead to its breakage.

Technical regulations, such as ASTM E2431 (2020) and NF DTU 39 P3 (2016), indicate maximum permissible values of thermal gradient or tension for different types of glass sheets, and therefore allow to select a sheet which supports the expected thermal stress conditions. Typically, above a thermal gradient between 30°C and 40°C, for example 35°C, glass sheets must be used which have undergone expensive treatments aimed right at withstanding thermal stress. The most commonly used treatments are tempering and heat strengthening.

The cost of these treatments derives both from the steps necessary to perform the treatment, and from the fact that the tempered or heat strengthened glass can no longer be subjected to cutting processes without breaking. Therefore, following these treatments it is not possible to simply provide treated glass sheets of large size, and make the custom cuts required for the building as a last step, but it becomes necessary to have the custom sheets immediately, and to subject each of them to treatment individually. Advantageous economies of scale are therefore lost.

The conditions of maximum thermal stress, which can lead right to the high thermal gradients discussed, occur when the temperature is low, but at the same time the radiation is high, and the glass sheet is partially radiated and partially in shadow.

In fact, the radiation causes a temperature increase in the glass. However, it remains localized, and therefore gives rise to thermal gradients, when part of the glass remains in the shade for a long time. The low ambient temperature increases the critical issue, because the edge of a glass sheet is in contact with frames or other architectural elements which in low temperature conditions prevent a significant increase in temperature. The elevated temperature therefore remains localized only in the central area, if radiated.

The most critical shadows are those which remain localized on the same area of the glass for a long time, in particular more than two hours. In fact, two hours is approximately the time necessary for the glass to reach thermal regime conditions, when subjected to a certain radiation. Such shadows generally originate from bodies close to the glass sheet.

For example, the shadow of a distant building rotates during the day, at a sufficiently high speed so as not to cause localized heating in a glass sheet, which in a short time passes from totally illuminated to totally in the shade, or vice versa. On the other hand, shadows of architectural elements of the building itself, such as a balcony or a protruding edge of the wall in which the more recessed sheet is installed, can affect essentially the same portion of the sheet for a long time.

Equally critical are the shadows of fixed objects near the building, which are not part of the building itself, and therefore are more difficult to predict in the design step. These can originate, for example, from plants, signs, scaffolding, and posters positioned in front of the façade at a subsequent instant. They are therefore more frequent on the lower floors of a building than on the upper floors.

The shadows which occupy an essentially static portion of the sheet are commonly referred to as hard shadows, regardless of whether they originate from the building itself or from external bodies.

### Problems of the prior art

Current regulations, such as ASTM E2431 and NF DTU 39 P3, propose calculating the thermal stress to which a glass sheet is subjected based on extremely generic environmental conditions. In fact, a single environmental condition is indicated for each reference macro-region. This clearly does not reflect local climatic conditions, determined for example by orography, which for the sheet may be more or less critical compared to the condition indicated by the regulations.

It is therefore particularly frequent that the regulations require the use of treated sheets even where there is no real risk of breakage due to thermal shock, with the imposition of costs which would have been avoidable. There are also cases in the opposite sense, i.e., underestimation of the real thermal stress, which result in even more serious consequences, such as the breakage of the glass.

### Summary of the invention

The object of the present invention is to overcome the drawbacks of the prior art, and in particular to select the types of glass best suited to the real thermal stress risk conditions.

This and other objects are achieved by a method or by software for designing glass sheets of a building, according to any one of the appended claims.

The invention envisages that the thermal shock risk assessment is based on a database containing meteorological data, divided by specific geographic locations and with a time distribution over different times of several days in different months of at least one year.

Then, once the location of the building where the glass will be installed has been selected, the critical climatic conditions from the viewpoint of thermal stress are identified, among those contained in the time distribution of the database. The selection of the type of glass is carried out according to the frequency of occurrence of the critical conditions.

Advantageously, the method takes into account the actual installation conditions characteristic of the location where the glass will be placed. Furthermore, the frequency of occurrence of the critical conditions allows to accurately calculate the probability that the glass will break in a long period of time. This is evidently better with respect to the calculation of the prior art, in which a single generic climatic condition was posed whose feasibility or frequency was not known.

Further features and advantages of the invention will be recognized by those skilled in the art from the following detailed description of exemplary embodiments of the invention.

### DETAILED DESCRIPTION

A design method for glass sheets of a building is described in detail below. The invention finds particular application for glass sheets, preferably flat, intended for use in a frame, or as glass sheets of a glass façade.

The design method includes a simulation of the thermal stress to which the glass sheets are subjected and therefore the selection of sheets suitable to withstand such stress from a list of types of sheets.

In any case, the invention also includes a computer program, containing instructions for automatically performing such a method, when the instructions are read by a computer, as well as a data medium readable by a computer containing the computer program in memory.

The design method comprises providing a list of types of glass sheets with different levels of thermal stress resistance. Within this list, the type to be used for at least some sheets of the building will be selected. In particular, it is possible for the method to lead to the selection of different types for different sheets of the same building.

A non-exhaustive example of a list of types includes tempered glass sheets, heat strengthened glass sheets, and glass sheets which have not been tempered or heat strengthened.

Thermal stress in particular means the thermal gradient to which the glass sheet is subjected, i.e., the temperature difference which occurs between two portions of the same glass sheet. The thermal stress results in a mechanical tension which, beyond a maximum endurance value, leads to the breakage of the glass sheet. As a contributing cause of the breakage, in some cases the installation of the glass sheet in a frame already causes a state of mechanical tension in the sheet, so that minor thermal gradients are sufficient to lead to the breakage.

In this context, thermal stress resistance is understood as the maximum thermal gradient applicable to the glass sheet without causing it to break, in relation to the duration of the stress or the mechanical constraints of the glass sheet.

However, embodiments of the invention are also allowed in which the thermal stress value, and by analogy the thermal stress resistance value, are expressed as the tension on the glass sheet caused by the thermal stresses, as the duration of the stress or other physical quantities connected, for example, to the temperature, to the solar energy absorption or to the solar radiation hitting the glass sheet.

According to an aspect of the invention, the method comprises providing a database containing a plurality of meteorological data. The meteorological data of particular interest for the invention are temperatures and radiation levels. However, other meteorological data such as humidity and wind speed can also be applied in the invention. Furthermore, the database can additionally contain meteorological or other data even if these are not used for the purposes of the invention which will be clarified below.

The meteorological data are divided into a plurality of geographic locations, i.e., they are georeferenced, for example by means of a GIS (geographic information system).

In the preferred embodiment, each geographic location corresponds to an area of territory of predetermined shape and size and uniform for all locations, for example a substantially square area, with a side for example of 30 km (the earth's curvature can be neglected for these purposes), or rectangular or circular areas.

Alternatively, each geographic location can be a municipality or a fraction of a municipality. In other embodiments, and independently of the administrative subdivisions adopted by different states, geographic locations corresponding to districts, including one or more towns and optionally territories surrounding such towns, can be contemplated.

The building for which the glass sheets are designed by means of the method of the invention is located in a pre-established geographic location identifiable in the database.

In the database, meteorological data with a time distribution of instants are attributed to each geographic location. Therefore, it is envisaged that there will be at least one meteorological datum for each geographic location and for each instant of the time distribution.

The time distribution must contain sufficient instants to be representative of the change in meteorological conditions within a day, and over the course of a year.

In particular, the time distribution, for each day considered, contains a plurality of times of day, preferably equidistant throughout the day so as to cover the entire duration of the day. In one embodiment, each instant of the time distribution corresponds to a time of day, and the included times are spaced from each other by an hour or less. However, longer distances between the instants included in the database, such as two, three, four or six hours, are permissible. Thus, four to twenty-four or more instants of the time distribution can be included for each day.

Furthermore, the time distribution contains a plurality of days in a plurality of months of at least one year. Preferably, multiple days are envisaged for each month of the year, for example all the days of each month. However, the invention can also be put into practice in the absence of some days of the year, or in the absence of one or more specific months, for example months in which climatic conditions are expected to entail a low thermal shock risk.

In an embodiment, the meteorological data contained in the database is, for each geographic location, a typical meteorological year (TMY). In such a case, the database covers exactly the duration of one year.

In other embodiments, the meteorological data contained in the database is, for each geographic location, a sequence of historical data collected in the geographic location. Preferably, the sequence of historical data covers a period of a plurality of years. Thereby, the considerations described below also take into account the natural variability of the climate from year to year.

The method then comprises selecting and processing the meteorological data related to the geographic location of the building. The processing is aimed at identifying occurrences, or instants of the time distribution, in which critical thermal stress conditions for the glass sheets occur. The critical conditions may be those which cause the breakage by thermal shock of at least some types of glass sheets, or even conditions only close to causing the thermal shock.

In an embodiment, the processing involves calculating a thermal stress value in reference to a glass sheet for each instant of the time distribution. Following this calculation, the occurrences of critical issues are selected, sought as the instants in which the thermal stress value exceeds a stress threshold value.

In other embodiments, the processing involves first selecting as critical conditions those instants when the meteorological conditions satisfy one or more criticality criteria. In this case, the criticality criteria do not already involve a calculation which provides a thermal stress value on a glass. Only then is the thermal stress calculated exclusively for the selected instants.

Examples of critical criteria are given by predetermined combinations of temperature and radiation, such as the simultaneous occurrence of a temperature below a temperature threshold, and of a radiation above a radiation threshold.

In a further embodiment, a first calculation of thermal stress is performed on all the instants of the time distribution, the selection of the critical instants is carried out, and then the thermal stress for the selected instants is recalculated with a more accurate method.

Methods suitable for calculating thermal stress with the climatic conditions of interest are generally known to those skilled in the art.

An example of a calculation, with a first precision and a first computational burden, is an analytical calculation method. The first computational burden is relatively low, and the first precision is also relatively low. Therefore, the analytical method is particularly suitable for calculating the thermal stress in a first step on all the instants of the time distribution. However, in some embodiments even the first precision is considered sufficient without the need for further, more accurate thermal stress calculations.

Another example of a calculation, with a second precision and a second computational burden, is a finite element calculation method. The second precision and the second computational burden are greater than the first precision and the first computational burden, respectively. Consequently, the finite element calculation is more suitable for the application after the selection of the critical instants. If the critical instants have been selected with a different calculation method, the finite element method can be used for a recalculation, in a second step. This recalculation, if present, is used as a basis for the thermal stress of the subsequent steps.

Both of these calculation methods may use as starting data one or more of the meteorological conditions mentioned, such as temperature, radiation and wind.

Regardless of the calculation mode selected, the calculation of the thermal stress values is preferably also carried out according to the dimensions and installation conditions envisaged for the glass sheets of the building.

Among the various installation conditions, one of the most relevant ones is the orientation of each glass sheet. Orientation means any, or both, of the orientation with respect to the cardinal points (such as north, south, west, east, and combinations thereof), and the orientation with respect to the vertical direction. In fact, it is evident that the radiation level is significantly different between glass sheets intended for the north or south side of a building. Also the inclination with respect to the vertical direction leads the glass sheet to intercept more or less sunlight as a function of the time of day, the season and the latitude.

Another installation condition which is preferably considered during the calculation is a glass sheet shadow condition. In particular, conditions of absent shadow, total shadow, or partial shadow may be included. In the case of partial shadow, various distributions of light and shadow on the sheet can be considered. The most appropriate distributions can be determined by considering hard shadows due to foreseeable installation conditions and the possibility of shadows due to external bodies.

Preferably, the partial shadow hypothesis is considered for at least one glass sheet of the building.

Finally, another preferred installation condition is given by the shape and the thermal and thermal-inertia parameters of the frame to which the glass sheet is intended to be fixed.

Having determined the thermal stress conditions for a plurality of instants with critical conditions, the method includes determining a frequency of occurrence of the critical conditions. In some embodiments, this corresponds to constructing a graph, or curve, of number of occurrences as a function of the thermal stress value. This graph or curve can be of the distribution type, which indicates in ordinate the number of occurrences which have exactly a certain thermal stress value in abscissa, or of the cumulative type, which indicates the number of occurrences for which the thermal stress is less (or greater) than the stress value in abscissa.

In other embodiments, a single number is sufficient to express this frequency, e.g., the number of times the stress has exceeded the stress threshold over a period of time, e.g., ten years.

Where the calculation of the thermal stress has been performed multiple times by different methods, the occurrence frequency can be determined multiple times with each of these methods, but for subsequent purposes the frequency determined based on the thermal stress values obtained with the method with greater accuracy is preferably used.

Finally, having obtained the frequency of occurrence of the critical conditions in the time distribution, the method includes providing an indication of suitability or unsuitability for at least one type of glass sheet of the starting list, according to the frequency of occurrence. The indication of suitability or unsuitability can for example indicate that a glass without tempering or heat strengthening is suitable or unsuitable to withstand the expected thermal stresses, with reference to a time span.

The indication of suitability is preferably provided in output by the computer program made to perform the method. The user therefore has the possibility to select a type of sheet for each glass sheet of the building under design, as a function of the indication of suitability or unsuitability, and therefore ultimately always depending on the frequency of occurrence. The type of sheet selected is made and installed in the building.

Alternatively, the computer program also performs the selection of the type of sheet itself, rather than simply giving the indication of suitability for a particular type of sheet.

By virtue of this design method, it is possible to estimate the number of occurrences of conditions which can cause glass breakage in a given period. Similarly, the expected average lifetime of the sheet before breakage can be obtained.

Of course, these calculations give more reliable results the larger the database and the more the climate remains stable, following installation, compared to its behaviour in the past. To overcome possible climate changes, safety margins on the expected thermal stress values can be considered appropriate.

Obviously, those skilled in the art will be able to make numerous equivalent changes to the above-mentioned variants, without thereby departing from the scope of protection defined by the united claims.

## Claims

1. A method for designing glass sheets of a building with a predetermined geographic location, comprising:
- providing a list of types of glass sheets with different levels of thermal stress resistance,
- providing a database containing a plurality of meteorological data divided into a plurality of geographic locations, wherein each geographic location is attributed meteorological data with a time distribution of instants, containing a plurality of days in a plurality of months of a year, and a plurality of times in each of said days,
- selecting and processing the meteorological data connected to the geographic location of the building, so as to identify within said time distribution one or more occurrences of critical thermal stress conditions for glass sheets, and
- providing an indication of suitability or unsuitability for at least one type of glass sheets in said list as a function of a frequency of occurrence of the critical conditions in the time distribution.

2. Method according to claim 1, comprising selecting for the glass sheets of the building one or more types of glass sheets from said list as a function of said indication of suitability or unsuitability.

3. Method according to claim 1 or 2, wherein said meteorological data include temperature and radiation levels.

4. Method according to any one of claims 1 to 3, wherein identifying the critical conditions comprises calculating thermal stress values in conditions of orientation of the glass sheets, and of shadowing of the glass sheets, whether absent, partial or total, preferably partial, according to the installation conditions envisaged for the glass sheets of the building.

5. Method according to any one of claims 1 to 4, wherein the thermal stress is expressed as a thermal gradient or mechanical tension, that is originated from a thermal action, to which the glass sheet is subjected.

6. Method according to any one of claims 1 to 5, wherein processing the meteorological data comprises calculating a thermal stress value for each instant of the time distribution, and selecting as critical conditions the instants when the thermal stress value exceeds a stress threshold.

7. Method according to claim 6, wherein:
- for each instant of the time distribution, the thermal stress value is calculated at a first step by an analytical method having a first precision,
- after selecting the instants with critical conditions, the design method comprises recalculating the thermal stress value at a second step, exclusively for the selected instants, by means of a finite element calculation, having a second precision greater than the first precision, and
- the frequency of occurrence of the critical conditions is determined based on the thermal stress values recalculated by means of the finite element calculation.

8. Method according to any one of claims 1 to 5, wherein processing the meteorological data comprises selecting as critical conditions the instants in which the meteorological conditions meet one or more criticality criteria, preferably given by predetermined combinations of temperature and radiation, and calculating the thermal stress exclusively for the selected instants.

9. Method according to any one of claims 1 to 8, wherein the time distribution of instants contains every day of at least one year, preferably a plurality of years, and at least four times in each day, preferably times spaced apart from each other by at most one hour covering the entire duration of each day.

10. Method according to any one of claims 1 to 9, wherein the meteorological data contained in the database is, for each geographic location, a typical meteorological year, or a sequence of historical data collected in the geographic location.

11. Computer program, containing instructions for automatically performing the method according to any one of claims 1 to 10, when read by a computer.
